# EUROPÄISCHE PATENTANMELDUNG

(11) **EP 3 369 502 A1**
(43) Veröffentlichungstag der Anmeldung: **05.09.2018**
(21) Anmeldenummer: 17159048.2
(22) Anmeldetag: 03.03.2017
(51) Int. Cl.: B23B 1/00, B23B 29/034, B23B 3/26, B23B 3/24

(54) **VERFAHREN ZUM DREHEN MIT ZWEI WERKZEUGSCHNEIDEN UND WERKZEUG DAFÜR**

(71) Anmelder: Schwäbische Werkzeugmaschinen GmbH, 78713 Schramberg-Waldmössingen (DE)
(72) Erfinder: Rohrer, Michael, 78713 Schramberg-Waldmössingen (DE)
(74) Vertreter: Kohler Schmid Möbus Patentanwälte

(57) **Zusammenfassung**

Bei einem Verfahren zum Plandrehen einer Kreisringfläche (2) eines Werkstücks (3) mittels eines um eine Z-Achse (5) rotierenden Werkzeugs (1), das zwei bezüglich der Z-Achse (5) einander im Abstand des Mittendurchmessers (DM) der Kreisringfläche (2) gegenüberliegende Werkzeugschneiden (6a, 6b) aufweist, wird zum Plandrehen der Kreisringfläche (2) das rotierende Werkzeug (1) und/oder das Werkstück (3) relativ zueinander auf einer, insbesondere archimedischen, Spiralbahn (7) um den Mittelpunkt (4) der Kreisringfläche (2) derart bewegt, dass während eines Spiralgangs der Spiralbahn (7) das Werkzeug (1) einmal um die Z-Achse (5) rotiert wird.

## Beschreibung

Die Erfindung betrifft ein Verfahren zum Flächeninterpolationsdrehen (Interpolations-Plandrehen) einer Kreisringfläche eines Werkstücks mittels eines um eine Z-Achse rotierenden Werkzeugs, sowie auch ein dafür geeignetes Werkzeug.

Beim bekannten Flächeninterpolationsdrehen einer Kreisringfläche wird ein Werkzeug mit einer Werkzeugschneide um die Z-Achse rotiert und dabei gleichzeitig das rotierende Werkzeug auf einer archimedischen Spiralbahn um den Mittelpunkt der Kreisringfläche derart bewegt, dass während eines Spiralgangs der Spiralbahn das Werkzeug einmal um die Z-Achse rotiert wird. Auf der archimedischen Spiralbahn wird die Werkzeugschneide über die gesamte Ringbreite der Kreisringfläche radial zugestellt.

Es ist demgegenüber die Aufgabe der Erfindung, bei einem Verfahren zum Flächeninterpolationsdrehen einer Kreisringfläche die Bearbeitungszeit zu verkürzen und ein entsprechendes Werkzeug bereitzustellen.

Diese Aufgabe wird erfindungsgemäß durch ein Verfahren zum Plandrehen einer Kreisringfläche eines Werkstücks mittels eines um die Z-Achse rotierenden Werkzeugs gelöst, das zwei bezüglich der Z-Achse einander im Abstand des Mittendurchmessers der Kreisringfläche gegenüberliegende Werkzeugschneiden aufweist, wobei zum Plandrehen der Kreisringfläche das rotierende Werkzeug und/oder das Werkstück relativ zueinander auf einer, insbesondere archimedischen, Spiralbahn um den Mittelpunkt der Kreisringfläche derart bewegt wird, dass während eines Spiralgangs der Spiralbahn das Werkzeug einmal um die Z-Achse rotiert wird, woraus sich die Bearbeitungsdrehzahl ergibt.

Das erfindungsgemäße Flächeninterpolationsdrehen mit zwei Werkzeugschneiden ist ein Interpolationsdrehen, bei dem die Hauptspindel des Bearbeitungszentrums zu einer lagegeregelten Achse umgeschaltet wird. Während die Hauptspindel in X-/Y-Richtungen durch die Achsen X und Y auf einer Spiralbahn geführt wird, orientiert sich das Werkzeug durch Drehen der Hauptspindel immer gleichbleibend zum aktuellen Vektor der durch X und Y erzeugten Spiralbahn. Im Vergleich zum klassischen Interpolations-Plandrehen wird erfindungsgemäß als Vorschubweg des Werkzeugs nur die halbe Planflächenbreite benötigt. Während beim klassischen Interpolations-Plandrehen auf der gesamten radialen Ringbreite (Ringbreite = Interpolationsradius) der Kreisringfläche interpoliert werden muss, wird erfindungsgemäß aufgrund der zwei Werkzeugschneiden und der halben Planflächenbreite (inkl. der Anordnung der Werkzeugschneiden auf den Schneidenradius bezogen, einmal auf Ringmitte +¼ der Ringbreite und einmal auf Ringmitte -% der Ringbreite) der erforderliche maximale Interpolationsradius demgegenüber auf ein Viertel reduziert, wodurch eine höhere Bearbeitungsdrehzahl erreicht wird.

Bei der Bearbeitung einer 10 mm breiten Kreisringfläche sind beim herkömmlichen Interpolationsdrehen mit nur einer einzigen Werkzeugschneide ein radialer Vorschub von 10 mm und ein maximaler Interpolationsradius von 10 mm erforderlich, was beispielsweise in einer Bearbeitungszeit von 9,5 s resultiert. Bei der Bearbeitung der gleichen Kreisringfläche sind beim erfindungsgemäßen Interpolationsdrehen mit zwei Werkzeugschneiden ein radialer Vorschub von 5 mm und ein maximaler Interpolationsradius von 2,5 mm erforderlich, was in einer deutlich kürzeren Bearbeitungszeit von 3,75 s resultiert

Gegenüber Planfräsen hat das erfindungsgemäße Flächeninterpolationsdrehen folgende Vorteile:
- Die Bearbeitungszeit verkürzt sich erheblich, da als Vorschubweg nur die halbe Planflächenbreite benötigt wird.
- Es können erheblich höhere Aufmaße in einem Schnitt zerspant werden, weil
   a. die Werkzeugschneide kontinuierlich im Schnitt ist,
   b. keine Schneideneintrittskraft vorhanden ist, wie beim Fräsen.
   c. ruhigeres Bearbeitungsverhalten, da anders als beim Fräsen durch das Ein- und Austreten von Werkzeugschneiden keine Schwingungsanregung für das Werkstück oder die Vorrichtung gegeben ist.
- Aus den vorgenannten Punkten ergibt sich zusammenfassend auch eine bessere Standzeit der Werkzeugschneiden gegenüber Fräsen.
- In der Regel können als Werkzeugschneiden relativ einfache Drehwendeschneidplatten eingesetzt werden (Plandrehen oder für 90°-Schultern).
- Werkzeugaufbereitungszeit reduziert sich, da nur zwei Werkzeugschneiden im Werkzeug sind.
- Im Ergebnis verringern sich die Bearbeitungszeit und die Schneidstoffkosten pro Werkstück erheblich.

Die beiden Werkzeugschneiden können auf unterschiedlichen Radien um die Z-Achse oder auf dem gleichen Radius um die Z-Achse angeordnet sein.

Das rotierende Werkzeug (bzw. die rotierende Z-Achse) oder das Werkstück kann auf der Spiralbahn von nach innen nach außen oder von außen nach innen um den Mittelpunkt der Kreisringfläche bewegt werden. Bei idealer Auslegung des Werkzeuges ist die Spirale wechselnd, d.h., sie fängt groß an, läuft gegen null und läuft in der gleichen Drehrichtung wieder Richtung groß, um am Schluss wieder am Startradius zu enden. Die jeweils letzten Spiralgänge der beiden Werkzeugschneiden auf der Kreisringfläche können beide in den Mittendurchmesser oder aber für einen stehenbleibenden Ringbund der Kreisringfläche in unterschiedliche Durchmesser auslaufen.

Die Erfindung betrifft in einem weiteren Aspekt auch ein rotierbares Werkzeug für das oben beschriebene Verfahren zum Plan-Interpolationsdrehen mit zwei bezüglich der Z-Achse einander gegenüberliegenden Werkzeugschneiden.

Vorteilhaft sind die beiden Werkzeugschneiden bezüglich der Z-Achse radial und axial verstellbar und können so leicht auf unterschiedliche Mittendurchmesser von Kreisringflächen sowie auf gleiche axiale Höhe eingestellt werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: ein erfindungsgemäßes Werkzeug mit zwei Werkzeugschneiden zum Flächeninterpolationsdrehen einer ringförmigen Werkstückfläche;
- Fig. 2: eine Draufsicht von oben auf das Werkzeug und die ringförmige Werkstückfläche;
- Fig. 3: die einzelnen Spiralgänge der beiden Werkzeugschneiden auf der ringförmigen Werkstückfläche beim Flächeninterpolationsdrehen der ringförmigen Werkstückfläche; und
- Fign. 4a, 4b: das Eintauchen der beiden Werkzeugschneiden in die ringförmige Werkstückfläche (Fig. 4a) und das Flächeninterpolationsdrehen der ringförmigen Werkstückfläche mittels der beiden Werkzeugschneiden.

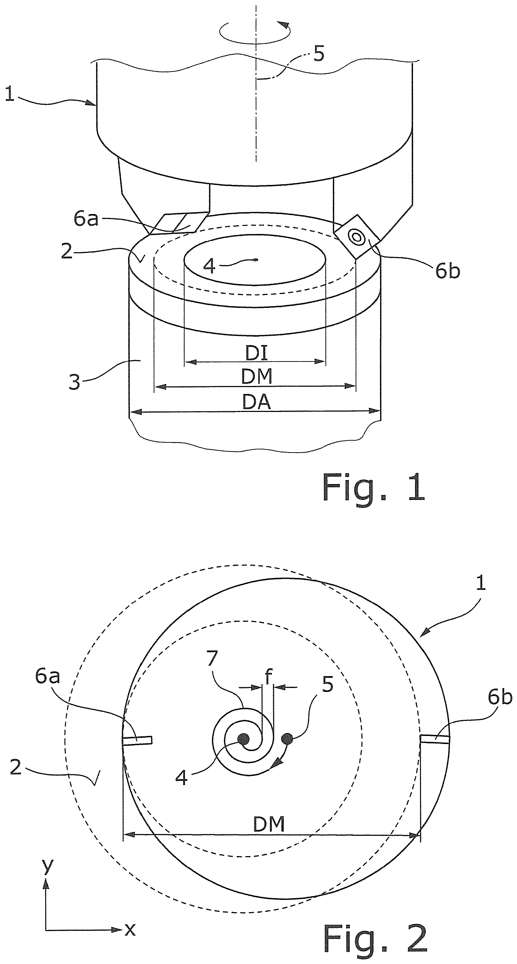

In **Fig. 1** ist ein Werkzeug **1** zum Flächeninterpolationsdrehen einer ringförmigen Werkstückfläche **2** eines Werkstücks (z.B. eines Rohres) **3** gezeigt. Der Außendurchmesser der ringförmigen Werkstückfläche 2 ist mit **DA,** der Innendurchmesser mit **DI**, der Mittendurchmesser mit **DM** und der Mittelpunkt bzw. die Mittelachse mit **4** bezeichnet.

Das Werkzeug wird von einer nicht gezeigten Hauptspindel eines Bearbeitungszentrums um die Z-Achse **5** rotiert und weist zwei bezüglich der Z-Achse 5 einander diametral im Abstand des Mittendurchmessers DM gegenüberliegende Werkzeugschneiden **6a, 6b** auf, welche auf unterschiedlichen Radien um die Z-Achse oder auf dem gleichen Radius um die Z-Achse angeordnet sein können. Wenn ein Ringbund auf der Werkstückfläche 2 stehen bleiben soll, müssen bzw. können die Werkzeugschneiden 6a, 6b nicht im Abstand des Mittendurchmessers DM sein.

Wie in **Fig. 2** gezeigt, wird zum Plandrehen der Kreisringfläche 2 das um die Z-Achse 5 rotierende Werkzeug 1 bzw. die Hauptspindel auf einer archimedischen Spiralbahn **7** um den Mittelpunkt 4 der Kreisringfläche 2 derart bewegt, dass während eines 360°-Spiralgangs der Spiralbahn 7 das Werkzeug 1 einmal um die Z-Achse 5 rotiert wird. Dadurch ist sichergestellt, dass das Werkzeug 1 mit seinen beiden Werkzeugschneiden 6a, 6b immer rechtwinklig zur aktuellen Bearbeitungsposition orientiert ist.

Der radiale Vorschub **f** je Umdrehung, also der Spiralgang der Spiralbahn 7, wird entsprechend der vorgewählten Spandicke gewählt und wirkt sich auf die beiden Werkzeugschneiden 6a, 6b in gleicher Weise aus, sofern die Anstellwinkel der beiden Werkzeugschneiden 6a, 6b identisch sind. Die Anstellwinkel der beiden Werkzeugschneiden 6a, 6b müssen aber nicht identisch sein. Die eine Werkzeugschneide erzeugt von außen nach innen die äußere Ringhälfte der Kreisringfläche 2, und gleichzeitig erzeugt die andere Werkzeugschneide von innen nach außen die innere Ringhälfte der Kreisringfläche 2.

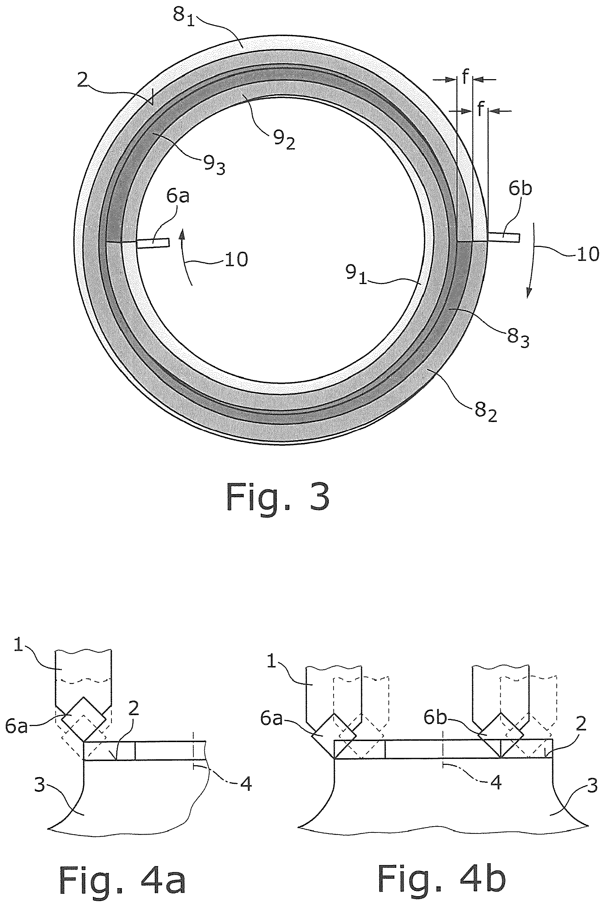

In **Fig. 3** sind die Spiralgänge **8**₁-**8**₃ und **9**₁-**9**₃, die beim Flächeninterpolationsdrehen von den beiden Werkzeugschneiden 6a, 6b in Bearbeitungsdrehrichtung **10** auf der Kreisringfläche 2 nacheinander abgefahren werden, jeweils mit unterschiedlichen Grautönen dargestellt, nämlich der erste Spiralgang 8₁, 9₁ hellgrau, der zweite Spiralgang 8₂, 9₂ mittelgrau und der dritte (letzte) Spiralgang 8₃, 9₃ dunkelgrau. Die letzten Spiralgänge 8₃, 9₃ können wie gezeigt beide in den Mittendurchmesser DM auslaufen oder aber für einen stehenbleibenden Ringbund der Kreisringfläche 2 in unterschiedliche Durchmesser auslaufen.

**Fig. 4a** zeigt das anfängliche Eintauchen bzw. das axiale Zustellen der hier linken Werkzeugschneide 6a in das Werkstück 3 aus einer durchgezogen dargestellten, axialen Anfangsposition bis in die gestrichelt dargestellte, axiale Endposition auf axialer Höhe der ringförmigen Werkstückfläche 2. Das Eintauchen (axialer Vorschub) wird ebenfalls nach dem vorbeschriebenen Interpolationsdrehprozess durchgeführt. Anschließend wird, wie in **Fig. 4b** gezeigt, das um die Z-Achse 5 rotierende Werkzeug 1 mit seinen beiden Werkzeugschneiden 6a, 6b aus der durchgezogen dargestellten, radialen Anfangsposition bis in die gestrichelt dargestellte, radiale Endposition verfahren.
Statt wie in den Figuren gezeigt die Z-Achse 5, kann alternativ auch das Werkstück 3 auf der Spiralbahn 7 bewegt werden. Je nach Kinematik der Maschine wird die Spiralbahn also nur von der Hauptspindel oder nur vom Werkstück 3 oder gemeinsam von Hauptspindel und Werkstück 3 (z.B. X-Achse treibt den Maschinentisch, Y-Achse treibt die Spindel) erzeugt.

## Patentansprüche

1. Verfahren zum Plandrehen einer Kreisringfläche (2) eines Werkstücks (3) mittels eines um eine Z-Achse (5) rotierenden Werkzeugs (1), das zwei bezüglich der Z-Achse (5) einander im Abstand des Mittendurchmessers (DM) der Kreisringfläche (2) gegenüberliegende Werkzeugschneiden (6a, 6b) aufweist, wobei zum Plandrehen der Kreisringfläche (2) das rotierende Werkzeug (1) und/oder das Werkstück (3) relativ zueinander auf einer, insbesondere archimedischen, Spiralbahn (7) um den Mittelpunkt (4) der Kreisringfläche (2) derart bewegt wird, dass während eines Spiralgangs der Spiralbahn (7) das Werkzeug (1) einmal um die Z-Achse (5) rotiert wird.

2. Verfahren nach Anspruch 1, **dadurch gekennzeichnet, dass** die beiden Werkzeugschneiden (6a, 6b) auf unterschiedlichen Radien um die Z-Achse (5) oder auf dem gleichen Radius um die Z-Achse (5) angeordnet sind.

3. Verfahren nach Anspruch 1 oder 2, **dadurch gekennzeichnet, dass** das rotierende Werkzeug (1) oder das Werkstück (3) auf der Spiralbahn (7) von innen nach außen oder von außen nach innen oder wechselnd von innen nach außen und von außen nach innen um den Mittelpunkt (4) der Kreisringfläche (2) bewegt wird.

4. Verfahren nach einem der vorhergehenden Ansprüche, **dadurch gekennzeichnet, dass** die jeweils letzten Spiralgänge (8₃, 9₃) der beiden Werkzeugschneiden (6a, 6b) auf der Kreisringfläche (2) beide in den Mittendurchmesser (DM) auslaufen oder aber für einen stehenbleibenden Ringbund der Kreisringfläche (2) in unterschiedliche Durchmesser auslaufen.

5. Rotierbares Werkzeug (1) für ein Verfahren zum Plandrehen nach einem der vorhergehenden Ansprüche, mit zwei bezüglich der Z-Achse (5) einander gegenüberliegenden Werkzeugschneiden (6a, 6b).

6. Rotierbares Werkzeug nach Anspruch 5, **dadurch gekennzeichnet, dass** die beiden Werkzeugschneiden (6a, 6b) bezüglich der Z-Achse (5) wahlweise radial verstellbar sind.
